# EUROPEAN PATENT SPECIFICATION

(11) **EP 1 189 801 B1**
(45) Date of publication and mention of the grant of the patent: **19.04.2006**
(21) Application number: 00939236.6
(22) Date of filing: 31.05.2000
(51) Int. Cl.: B62K 23/06, B62L 3/02

(54) **A HANDLE DEVICE FOR BICYCLE, MOPED, ROLLATOR OR SIMILAR VEHICLE**
HANDGRIFF FÜR FAHRRAD, MOTORRAD ODER ÄHNLICHE FAHRZEUGE
MECANISME DE POIGNEE POUR BICYCLETTE, CYCLOMOTEUR, APPAREIL DE MARCHE ROLLATOR OU VEHICULE SIMILAIRE

(30) Priority: 04.06.1999 SE 9902066
(43) Date of publication of application: 27.03.2002
(73) Proprietor: Runnemalm, Sten, 340 32 Grimslöv (SE)
(72) Inventor: Runnemalm, Sten, 340 32 Grimslöv (SE)
(74) Representative: Lundquist, Arne
(86) International application number: PCT/SE2000/001141
(87) International publication number: WO 2000/075003

(56) References cited:
- DE-A1- 3 706 545
- DE-A1- 4 306 862

## Description

The present invention relates to a handle device for vehicle provided with handlebar, like a bicycle, a moped, a rollator or similar, which device has a handlebar handle and a manoeuvre arm, turnably connected to the latter for manoeuvring of a functional means, provided at the vehicle, like a brake means, which manoeuvre arm is arranged to be coupled to this means via a coupling element, like a wire, and is by manual force turnable from a passive position, turned out from the handlebar handle, towards which it is arranged to be prestressed, to an active position, turned in towards the handlebar handle, to activate the functional means. Such a handle device is shown in DE-A-43 06 862.

At conventional handle devices of this type, intended for bicycles, the handlebar handle is treaded onto one end of an handle bar, and the manoeuvre arm is at its inner end turnably connected with the handlebar handle at the inner end of this. The manoeuvre arm is via a wire coupled to a brake mechanism, that is arranged at one of the wheels of the bicycle in order to retard same when activated. The manoeuvre arm constitutes one of the arms of an angular lever, the second arm of which is connected to the wire. The design is such, that the manoeuvre arm in its not activated position is turned out a relatively large angle in relationship to the handlebar handle. In order to be able to take hold around the manoeuvre arm in its turned out, not activated position the cyclist therefor has to stretch his fingers and thus considerably deteriorate his grasp around the handlebar handle. This is especially true when the cyclist is a child, for whom it may be hard to catch the manoeuvre arm at all with his fingers. Furthermore, at this conventional handle device a relatively large force is needed to turn the manoeuvre arm from its not activated position to its turned inwardly, activated position for activation of the brake mechanism. The turning inwardly of the manoeuvre arm is thereby furthermore rendered more difficult by the fact, that the cyclist substantially must press the manoeuvre arm towards the handlebar handle with the aid of the outer finger, that is to say the little finger, which is the weakest finger and between which and the thumb the weakest grasp is achieved. When cycling, the cyclist catches with one hand around the handlebar handle, whereas the thumb of the hand is placed at the side of the handlebar handle, opposite to the manoeuvre arm, and the other fingers of the hand are placed in the space between the handlebar handle and the turned out manoeuvre arm. Here there is a great risk, that the cyclist shall suffer from squeeze injuries at his/her fingers if he/she falls over or hits an object in such a way, that the manoeuvre arm is hit and is pressed towards the handlebar handle. There is a great risk that the extended, outer end of the manoeuvre arm shall cause stab injuries when the cyclist is falling over

The object of the present invention is, in view of what is said above, to achieve a handle device, of the art mentioned introductorily, of such a design, that it enables the reduction of the force needed to press in the manoeuvre arm to its active position, to perform this pressing substantially with the aid of the forefinger and the middle finger and to reduce the risks for injuries when falling over mentioned above.

This object is achieved according to the present invention by a handle device of the art mentioned introductorily and is characterised in that the manoeuvre arm is turnably connected with the handlebar handle in vicinity of the outer end of same, that the handlebar handle has longitudinal slot, open towards the manoeuvre arm, into which slot the manoeuvre arm is inserted in its active position, that the manoeuvre arm has a longitudinal slot, open towards the handlebar handle, located just in front of to the slot of the manoeuvre arm, and that a link system, comprising links, arranged in a row and connected to each other, extends along and partly within both slots, whereas the inner link of the link system at its inner end is flexibly connected to the handlebar handle in the slot of same, whereas the link system is arranged to be supported by the slot bottom of the slot of the manoeuvre arm and the slot of the handlebar handle at the points of the link joints between each pair of links following each other and at the outer end of the outer link of the link system, which link is arranged to be connected to the coupling element.

Rolls are preferably mounted at the link system at its link joint joints and at outer end of its outer link, which rolls are arranged to lie against and at the turning of the manoeuvre arm in relationship to the handlebar handle roll off against the bottoms of the slots.

Suitably the manoeuvre arm is arranged to be prestressed via the link system towards its not active position by the coupling element.

Preferably the handlebar handle at its inner end is provided with a stop, against which the manoeuvre arm lies in its not active position.

Suitably the manoeuvre arm is made from a U- profile and the slot in the handlebar handle is limited by a U- profile.

In one advantageous embodiment the manoeuvre arm is provided with a lock slide, that is displaceable in the longitudinal direction of the manoeuvre arm between an extended lock position in which the lock slide extends out of the inner end of the manoeuvre arm, but when the manoeuvre arm is in its not active position, grasp a lock boss at the handlebar handle thus preventing the turning of manoeuvre arm to the active position, and a retracted free position in which the manoeuvre arm is free for turning.

The invention shall now be described more in detail, reference being made to the enclosed drawings.

Figure 1 is a view of a longitudinal section of a handle device according to the invention with a manoeuvre arm turned out.

Figure 2 shows the handle device in the direction of the arrow II in figure 1, the manoeuvre arm and covering portion excluded.

Figure 3 is a view of a longitudinal section corresponding to figure 1, but shows the manoeuvre arm in a turned in position.

Figure 4 shows handle device in the direction of the arrow IV in figure 3, the manoeuvre arm and covering portion excluded.

Figure 5 is a side view and shows a handle device according to the invention, provided with covering plates, the manoeuvring arm turned out.

Figure 6 is a side view and shows a handlebar handle included in the device.

Figure 7 is an end view and shows the handlebar handle in the direction of the arrow VII in figure 6.

The handle device shown in the drawings has a pipe- formed handlebar handle 1 made from plastics, e g polyurethane, at one of its ends is provided with an end flange 2 and that is arranged to be threaded onto a bicycle handle (not shown) with the end flange 2 first from outside in the direction of threading. Said first end of the handlebar handle 1, that is to say the end provided with the end flange 2, will therefor in the disclosure as well as in the enclosed patent claims be referred to as the inner end of the handlebar handle, whilst the other end of the handlebar handle will be referred to as its outer end. For the other components of the device "inner" and "outer" here will be used correspondingly. The hole 3 throughout the handlebar handle 1 has substantially the same diameter as the handlebar.

The handlebar handle 1 has a longitudinal slot 4, that extends from the outer end of the handlebar handle to some extent into the end flange 2, This longitudinal slot 4 is transformed into the end flange 2 in a slot 5, formed in same, extending perpendicularly towards the slot 4 radially over the flange 2. The slot 4 has, at the outer end of the handlebar handle 1, an expanded portion 4a, somewhat broader than the rest of the slot. A U- profile of metal is fastened in the slot 4 with its slot turned outwardly and extends along all of the slot 4.

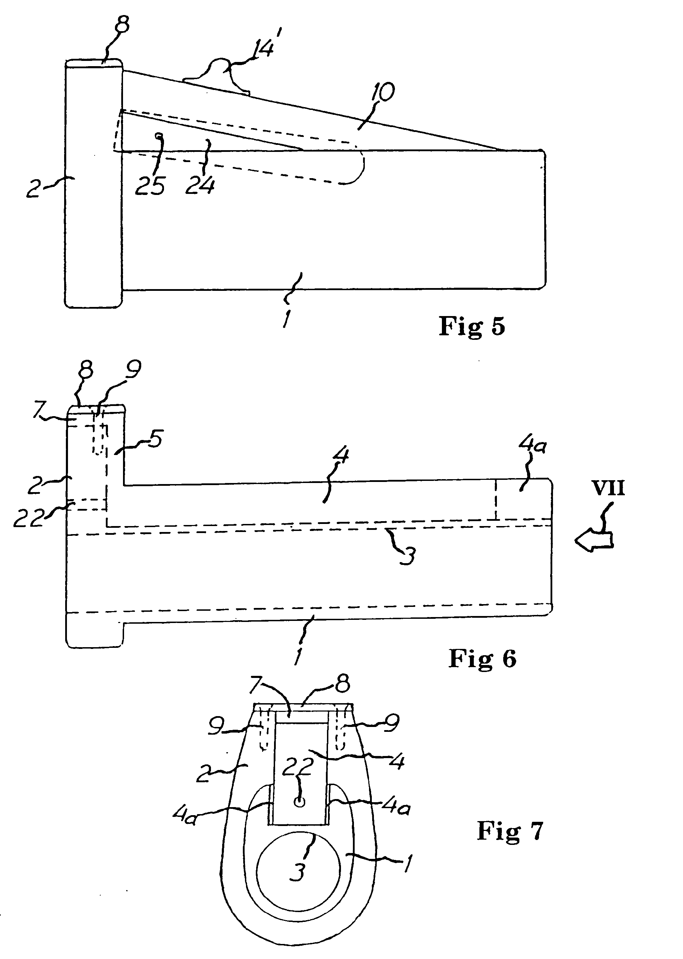

The end flange 2 has, at the mouth of the slot 5, an axial slot 7, connected with the slot 5. This axial slot 7 and the mouth of the radial slot 5 are covered of a cover portion 8, that is fastened at the end flange 2 by screws 9 (see figures 6 and 7).

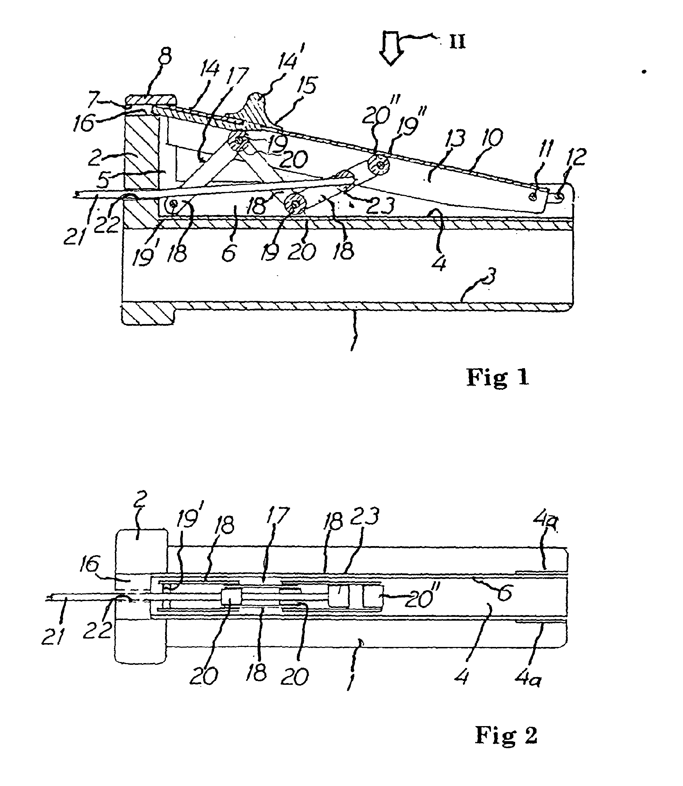

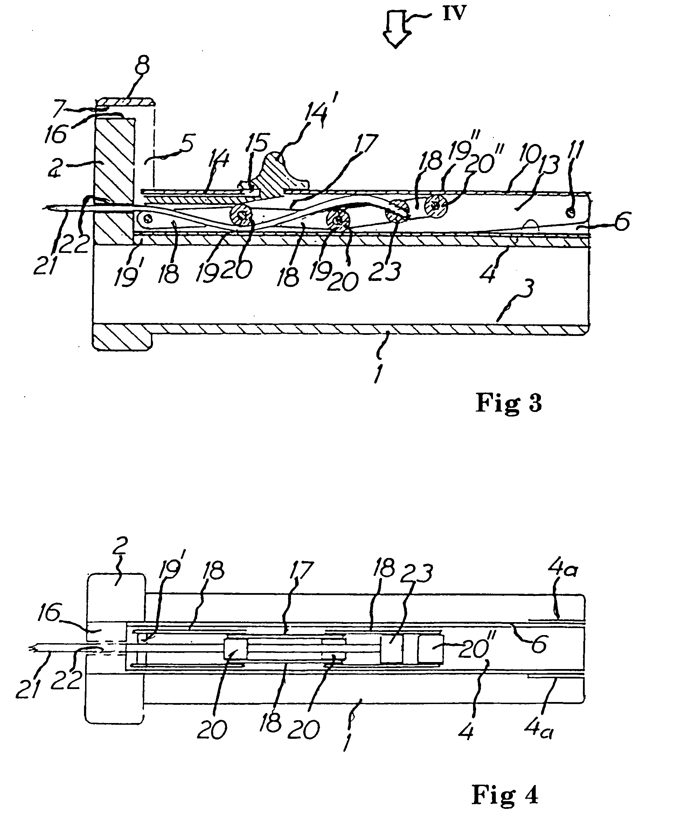

A manoeuvre arm 10 is at its outer end turnably connected with the handlebar handle 1 at the outer end of same. The manoeuvre arm 10 is journalled around a pin 11, extending trough a groove 12 parallel to the slot 4 in each of the U- legs of the U-profile 6 and through the manoeuvre arm 10. The grooves 12 are formed just in front of the expanded portion 4a of the slot 4. The manoeuvre arm 10 is formed from a U- profile of metal, the slot 13 of which is turned towards the U-profile 6 and the external width is somewhat inferior to the internal width of the U- profile. The manoeuvre arm 10 is turnable between a turned out, not active position (figure 1) and a turned in, active position (figure 3), in which it is substantially parallel to the U- profile 6 and substantially completely inserted in same.

The manoeuvre arm 10 has such an extension, that its inner end is placed in, and during the turning of the manoeuvre arm runs in the radial slot 5 in the end flange 2. The manoeuvre arm 10 lies in its turned out position against the cover portion 8, which thus forms a stop for the manoeuvre arm 10.

A lock slide 14 is arranged at the bottom of the slot 13 in the U- profile forming the manoeuvre arm 10. The lock slide 14 is connected to manoeuvre button 14', extending through a groove-formed opening 15 in the rib portion of the U- profile and protrudes somewhat from the manoeuvre arm 10. The lock slide 14 is displaceable in the longitudinal direction of the manoeuvre arm 10 between an extended lock position (figure 1), in which it extends beyond the inner end of the manoeuvre arm, and when the manoeuvre arm 10 is its turned out, not active position grasp one lock boss 16, provided at the handlebar handle and thus prevent the turning of the manoeuvre arm to the turned in, active position, and and a retracted free position (figure 3), in which the manoeuvre arm 10 is freed for turning. The lock boss 16 is formed, in the embodiment shown, by bottom of the axial slot 7, formed in the end flange 2.

A link system 17, comprising at a row after each other and with each other flexibly joined links 18 extends along and partly in the slots, open towards each other, in the two U- profiles 6 and 10 (the manoeuvre arm). The link system 17 is of the chain link type, and each of its links 18 consists of two parallel and in some distance from each other arranged link parts. The links 18 are, at their ends, flexibly connected with each other by a pin 19, carrying a roll 20, rotatable around the pin and placed between the link parts. A pin 19' is also arranged at the inner end of the inner link 18 of the link system 17. The inner link 18 is flexibly connected to the U- profile 6, by the pin 19', flexibly connected to the U-profile 6. A pin 19", that journalled bears a roll 20", is arranged at the outer end of the outer link 18 of the link system 17. The link system 17 comprises, in the embodiment shown, three links 18. The inner roll 20 of the intermediate link 18 (or, outer roll of the inner link) is supported as well as the outer roll 20" of the bottom of the slot 13 in the U- profile, forming the manoeuvre arm 10. The outer roll 20 of the intermediate link 18 (or the inner roll of the outer link) is supported against the bottom (rib) of the U- profile 6.

A wire is at one of its ends coupled to a brake mechanism (not shown) that is arranged at one of the wheels of the bicycle, to brake same when caused to function. The wire 21 extends through one hole 22 in the end flange 2 into the U- profile 6 and is at its other end connected with a rotatable roll 23, arranged between the link portions of the outer link 18. The roll 23 is situated closer to the outer end of the outer link 18 than to its inner end. Said other of the wire extends into a diametral hole in the roll 23 and is fastened to it by a lock screw (not shown)., that extends axially into the roll 23. The brake mechanism is prestressed towards a position, not braking, and exerts a springy tensile stress at the wire 21, which thereby prestresses the the link system 17 towards the zigzag position shown in figure 1, in which the link system 17 keeps the manoeuvre arm 10 in its turned out, not active position.

When the lock slide 14 is in its free position, the manoeuvre arm 10 may be pressed by manual force to its active position against the prestress force exerted by the brake mechanism via the wire 21 and the link system 17. When the manoeuvre arm 10 is pressed in to the active position, the link system 17 is extended or is made straight to the position shown in figure 3, in which it via the wire 21 draws the brake mechanism to its active position for braking the bicycle wheel with full braking force.

As is seen in figure 1, the manoeuvre arm forms, in its turned out, not active position, a small angle to the handlebar handle 1, wherefore its inner end in this position is situated at a small distance from the handlebar handle 1.The cyclist can therefore easily grasp around the handle device with his thump grasping over the handlebar handle 1 and with the rest of his fingers grasping over the manoeuvre arm 10. Thereby the cyclist holds his forefinger between the inner end of the manoeuvre arm 10 and the manoeuvre button 14' of the lock slide and the other fingers (looking away from the thumb) outside the manoeuvre button 14'. If the cyclist has chosen to set the lock slide 14 in its lock position, which of course is necessary, if he or she will grasp firmly around the handle device without causing braking, for example when driving at a steep hill, the lock slide must be put to its free position, before the manoeuvre arm can be pressed in for braking. The lock slide 14 is led to its free position by the aid of the forefinger, and this happens automatically when the manoeuvre arm 10 is pressed in, as the direction of the grasp force, exerted for pressing in same is such, that the forefinger puts the lock slide to the free position.

In order to completely eliminate the minimal risk for pinching or squeeze injuries, that may occur at the disclosed handle device according to the invention, the device may be provided, as is shown in figure 5, at each side with a cover plate 24, which covers the space between the handlebar handle 1 and the manoeuvre arm 10, when same is its turned out position. These cover plates 24 are fastened, turnable at the inner link 18 of the link system 17, by a pin 25.

## Claims

1. A handle device for vehicle provided with handlebar, like a bicycle, a moped, a rollator or similar, which device has a handlebar handle (1) and a manoeuvre arm (10), turnably connected to the latter for manoeuvring of a functional means, provided at the vehicle, like a brake means, which manoeuvre arm is arranged to be coupled to this means via a coupling element (21), like a wire, and is by manual force turnable from a passive position, turned out from the handlebar handle (1), towards which it is arranged to be prestressed, to an active position, turned in towards the handlebar handle, to activate the functional means,
**characterized in that**
the manoeuvre arm (10) is turnably connected with the handlebar handle (1) in vicinity of the outer end of same, that the handlebar handle (1)has a longitudinal slot (4), open towards the manoeuvre arm (10), into which slot (4) the manoeuvre arm (10) is inserted in its active position, that the manoeuvre arm (10) has a longitudinal slot (13), open towards the handlebar handle (1), located just in front of to the slot (4) of the manoeuvre arm(10), and that a link system (17), comprising links (18), arranged in a row and connected to each other, extends along and partly within both slots (4, 13), whereas the inner link (18) of the link system (17) at its inner end is flexibly connected to the handlebar handle (1) in the slot (4) of same, whereas the link system (17) is arranged to be supported by the slot bottom of the slot (13) of the manoeuvre arm (10) and the slot of the handlebar handle (1) at the link joint points between each pair of links (18) following each other and at the outer end of the outer link (18) of the link system (17), which link (18) is arranged to be connected to the coupling element (21).

2. A device according to claim 1,
**characterised in that**
rolls (20, 20") are mounted at the link system (17) at its link joint joints and at outer end of its outer link (18), which rolls (20, 20") are arranged to lie against and at the turning of the manoeuvre arm (10) in relationship to the handlebar handle (1) roll off against the bottoms of the slots (4, 13).

3. A device according to claim 1 or 2,
**characterised in that**
the manoeuvre arm (10) is arranged to be prestressed via the link system (17) towards its not active position by the coupling element (21).

4. A device according to any of the preceding claims,
**characterised in that**
the handlebar handle (1) at its inner end is provided with a stop (8), against which the manoeuvre arm (10) lies in its not active position.

5. A device according to any of the preceding claims,
**characterised in that**
the manoeuvre arm (10) is made from a U- profile.

6. A device according to any of the preceding claims,
**characterised in that**
the slot (4) in the handlebar handle (1) is limited by a U- profile (6).

7. A device according to any of the preceding claims,
**characterised in that**
the manoeuvre arm (10) is provided with a lock slide (14), that is displaceable in the longitudinal direction of the manoeuvre arm (10) between an extended lock position in which the lock slide (14) extends out of the inner end of the manoeuvre arm (10), but when the manoeuvre arm (10) is in its not active position, grasps a lock boss (16) at the handlebar handle (1) thus preventing the turning of manoeuvre arm (10) to the active position, and a retracted free position in which the manoeuvre arm is free for turning.

## Patentansprüche

1. Griffanordnung für ein mit einer Griffstange versehenes Fahrzeug, wie ein Fahrrad, ein Moped, ein Rollator oder Ähnliches, wobei die Griffanordnung einen Griffstangen-Griff (1) und einen Betätigungshebel (10) aufweist, der mit letzterem zur Betätigung einer an dem Fahrzeug angeordneten funktionalen Einrichtung wie einer Bremseinrichtung drehbar verbunden ist, und der zur Verbindung mit dieser Einrichtung über ein Verbindungselement (21) wie einen Draht angeordnet ist, und der durch Handkraft von einer passiven Position, in der er aus dem Griffstangen-Griff (1), an dem er zur Vorspannung angeordnet ist, herausgedreht ist, in eine aktive Position, in der er in Richtung auf den Griffstangen-Griff gedreht ist, zur Aktivierung der funktionalen Einrichtung drehbar ist, **dadurch gekennzeichnet,**
**dass** der Betätigungshebel (10) mit dem Griffstangen-Griff (1) in der Nähe von dessen äußerem Ende drehbar verbunden ist, dass der Griffstangen-Griff (1) einen Längsschlitz (4) aufweist, der in Richtung auf den Betätigungshebel (10) offen ist und in den der Betätigungshebel (10) in seiner aktiven Position eingeführt ist, dass der Betätigungshebel (10) einen in Richtung auf den Griffstangen-Griff (1) offenen Längsschlitz (13) aufweist, der vor dem Schlitz (4) des Griffstangen-Griffs (1) angeordnet ist, und dass sich ein Verbindungssystem (17) mit Verbindungsgliedern (18), die in einer Reihe angeordnet und miteinander verbunden sind, entlang und teilweise in den beiden Schlitzen (4, 13) erstreckt, wobei das innere Verbindungsglied (18) des Verbindungssystems (17) an seinem inneren Ende flexibel mit dem Griffstangen-Griff (1) in dessen Schlitz (4) verbunden ist, wobei das Verbindungssystem (17) so angeordnet ist, dass es durch den Schlitzboden des Schlitzes (13) des Betätigungshebels (10) und den Schlitz des Griffstangen-Griffs (1) an den Verbindungspunkten der Verbindungsglieder zwischen jedem Paar von Verbindungsgliedern (18), die aufeinander folgen, und an dem äußeren Ende des äußeren Verbindungsgliedes (18) des Verbindungssystems (17), das zur Verbindung mit dem Verbindungselement (21) angeordnet ist, gestützt wird.

2. Griffanordnung nach Anspruch 1,
**dadurch gekennzeichnet, dass** an dem Verbindungssystem (17) Rollen (20, 20") an den Verbindungspunkten der Verbindungsglieder und an dem äußeren Ende seines äußeren Verbindungsgliedes (18) montiert sind, wobei die Rollen (20, 20") so angeordnet sind, dass sie an dem Boden der Schlitze (4, 13) anliegen und beim Drehen des Betätigungshebels (10) relativ zu dem Griffstangen-Griff (1) an dem Boden der Schlitze (4, 13) abrollen.

3. Griffanordnung nach Anspruch 1 oder 2,
**dadurch gekennzeichnet, dass** der Betätigungshebel (10) so angeordnet ist, dass er durch das Verbindungselement (21) über das Verbindungssystem (17) in Richtung auf seine nicht aktive Position vorgespannt wird.

4. Griffanordnung nach einem der vorhergehenden Ansprüche,
**dadurch gekennzeichnet, dass** der Griffstangen-Griff (1) an seinem inneren Ende mit einem Anschlag (8) versehen ist, an dem der Betätigungshebel (10) in seiner nicht aktiven Position anliegt.

5. Griffanordnung nach einem der vorhergehenden Ansprüche,
**dadurch gekennzeichnet, dass** der Betätigungshebel (10) aus einem U-Profil gebildet ist.

6. Griffanordnung nach einem der vorhergehenden Ansprüche,
**dadurch gekennzeichnet, dass** der Schlitz (4) in dem Griffstangen-Griff (1) durch ein U-Profil (6) begrenzt ist.

7. Griffanordnung nach einem der vorhergehenden Ansprüche,
**dadurch gekennzeichnet, dass** der Betätigungshebel (10) mit einem Verriegelungsschieber (14) versehen ist, der in der Längsrichtung des Betätigungshebels (10) zwischen einer ausgefahrenen Verriegelungsstellung, in der sich der Verriegelungsschieber (14) aus dem inneren Ende des Betätigungshebels (10) heraus erstreckt, jedoch wenn sich der Betätigungshebel (10) in seiner nicht aktiven Position befindet, einen Verriegelungs-Vorsprung (16) an dem Griffstangen-Griff (1) erfasst und somit verhindert, dass sich der Betätigungshebel (10) in die aktive Position dreht, und einer zurückgefahrenen freien Position, in der sich der Betätigungshebel frei drehen kann, verschiebbar ist.

## Revendications

1. Dispositif formant poignée pour un véhicule, muni d'un guidon comme une bicyclette, une motocyclette, un ambulateur ou similaire, lequel dispositif a une poignée de guidon (1) et un bras de manoeuvre (10), connecté de manière rotative à cette dernière pour manoeuvrer des moyens fonctionnels, agencés au niveau du véhicule, comme des moyens de freinage, lequel bras de manoeuvre est agencé pour être couplé à ces moyens via un élément de couplage (21), tel qu'un fil métallique, et peut être tourné par l'intermédiaire d'une force manuelle d'une position passive, tourné vers l'extérieur par rapport à la poignée de guidon (1), en direction de laquelle il est agencé pour être précontraint, vers une position active, tourné vers l'intérieur en direction de la poignée de guidon, pour activer les moyens fonctionnels,
**caractérisé en ce que**
le bras de manoeuvre (10) est connecté de manière rotative avec la poignée de guidon (1) à proximité de l'extrémité extérieure de celle-ci, **en ce que** la poignée de guidon (1) a une fente longitudinale (4), ouverte vers le bras de manoeuvre (10), le bras de manoeuvre (10) étant inséré dans cette fente (4) dans sa position active, **en ce que** le bras de manoeuvre (10) a une fente longitudinale (13), ouverte vers la poignée de guidon (1), située exactement en avant de la fente (4) du bras de manoeuvre (10), et **en ce qu'**un système de liaison (17), comportant des liaisons (18), agencées en une rangée et connectées les unes aux autres, s'étend le long des deux fentes (4, 13), et partiellement dans celles-ci, tandis que la liaison intérieure (18) du système de liaison (17), à son extrémité intérieure, est connectée de manière souple à la poignée de guidon (1) dans la fente (4) de celui-ci, tandis que le système de liaison (17) est agencé pour être supporté par le fond de la fente (13) du bras de manoeuvre (10), et la fente de la poignée de guidon (1), au point de joint de liaisons, entre chaque paire de liaisons (18) se suivant les unes les autres, et à l'extrémité extérieure de la liaison extérieure (18) du système de liaison (17), laquelle liaison (18) est agencée pour être connectée à l'élément de couplage (21).

2. Dispositif selon la revendication 1,
**caractérisé en ce que**
des rouleaux (20, 20") sont montés au niveau du système de liaison (17) à ses jointures de joints de liaisons et à l'extrémité extérieure de sa liaison extérieure (18), lesquels rouleaux (20, 20") sont agencés pour se trouver contre le bras de manoeuvre (10), et lorsque celui-ci est tourné par rapport à la poignée de guidon (1), pour rouler jusqu'aux fonds des fentes (4, 13).

3. Dispositif selon la revendication 1 ou 2,
**caractérisé en ce que**
le bras de manoeuvre (10) est agencé pour être précontraint via le système de liaison (17) vers sa position inactive par l'élément de couplage (21).

4. Dispositif selon l'une quelconque des revendications précédentes,
**caractérisé en ce que**
la poignée de guidon (1), à son extrémité intérieure, est munie d'une butée (8) contre laquelle le bras de manoeuvre (10) se trouve dans sa position inactive.

5. Dispositif selon l'une quelconque des revendications précédentes,
**caractérisé en ce que**
le bras de manoeuvre (10) est fabriqué à partir d'un profilé en U.

6. Dispositif selon l'une quelconque des revendications précédentes,
**caractérisé en ce que**
la fente (4) dans la poignée de guidon (1) est limitée par un profilé en U (6).

7. Dispositif selon l'une quelconque des revendications précédentes,
**caractérisé en ce que**
le bras de manoeuvre (10) est muni d'un coulisseau de verrouillage (14), qui peut être déplacé dans la direction longitudinale du bras de manoeuvre (10) entre une position de verrouillage étendue dans laquelle le coulisseau de verrouillage (14) s'étend à l'extérieur de l'extrémité intérieure du bras de manoeuvre (10), mais lorsque le bras de manoeuvre (10) est dans sa position inactive, saisit un bossage de verrouillage (16) au niveau de la poignée de guidon (1), en empêchant ainsi la rotation du bras de manoeuvre (10) vers la position active, et une position libre rétractée, dans laquelle le bras de manoeuvre est libre de tourner.
